# EUROPEAN PATENT SPECIFICATION

(11) **EP 3 805 151 B1**
(45) Date of publication and mention of the grant of the patent: **03.04.2024**
(21) Application number: 18921190.7
(22) Date of filing: 30.05.2018
(51) Int. Cl.: C01B 13/11, H01H 85/00

(54) **OZONE GENERATION DEVICE**
OZONERZEUGUNGSVORRICHTUNG
DISPOSITIF DE GÉNÉRATION D'OZONE

(43) Date of publication of application: 14.04.2021
(73) Proprietor: Mitsubishi Electric Corporation, Tokyo 100-8310 (JP)
(72) Inventor: NAKATANI, Hajime, Tokyo 100-8310 (JP); YAMAZAKI, Koji, Tokyo 100-8310 (JP); HIRANABE, Naoki, Tokyo 100-8310 (JP); ODAI, Yoshiaki, Tokyo 100-8310 (JP)
(74) Representative: Witte, Weller & Partner Patentanwälte mbB
(86) International application number: PCT/JP2018/020676
(87) International publication number: WO 2019/229865

(56) References cited:
- EP-A1- 3 205 623
- EP-A1- 3 633 708
- WO-A1-2015/122131
- WO-A1-2016/084181
- JP-A- 2002 075 590
- JP-A- 2007 169 134
- JP-A- 2007 169 134
- JP-A- 2008 050 200
- US-A1- 2015 247 246

## Description

### FIELD OF THE INVENTION

The present application relates to an ozone generator in which a gas including oxygen is ozonized by an electric discharge, and more particularly, relates to a power feeding structure to a voltage applied electrode.

### BACKGROUND OF THE INVENTION

A brief explanation will be made about the structure of an ozone generator. A voltage applied electrode is formed on the inner surface of a dielectric tube which is made from glass, and a grounded metal electrode is disposed in a concentric fashion on the outer circumference of the dielectric tube ( for example, refer to Patent Documents 1 to 3 ). One end of a high frequency high voltage generating power source is electrically connected to a voltage applied electrode, through a high voltage lead wire, an electricity feeding member, a fuse, an electricity feeding member, and an electricity feeding element. The other end of the high frequency high voltage generating power source is connected to a grounded metal electrode. In a discharge gap, a gas which includes oxygen gas and a slight small amount of nitrogen gas will be introduced.

When a high frequency high voltage generating power source is put into operation, a silent electric discharge will be generated in a discharge gap. As the result of an excitation in the gas, which is caused in a discharge gap by the silent electric discharge, ozonized gas is generated. When the temperature in a discharge gap is increased, ozone generation efficiency will be lowered, and then, heat which is generated by the electric discharge is cooled with cooling water which flows through the circumference of a grounded metal electrode. The cooling water cools the grounded metal electrode, and in addition, cools also the dielectric tube. If a hollow gap is produced between a voltage applied electrode and a dielectric tube, an electric discharge will be generated in this hollow gap.

Since heat which is generated by an electric discharge raises the temperature of a glass tube, the ozone generator is configured so that a hollow gap may not be produced between a voltage applied electrode and a dielectric tube. Further, electric discharge deposits, which consist of nitric acid compounds and others, adhere on the surface of a grounded metal electrode and on the outside surface of a dielectric tube, owing to the electric discharge. Because ozonized gas, which is generated during the operation of an ozone generator, and nitric acid gas, which is generated from the electric discharge deposits during the time when the operation of an ozone generator is under suspension, are highly corrosive, a portion which can be in contact with the corrosive gases is made from a material with high corrosion resistance.

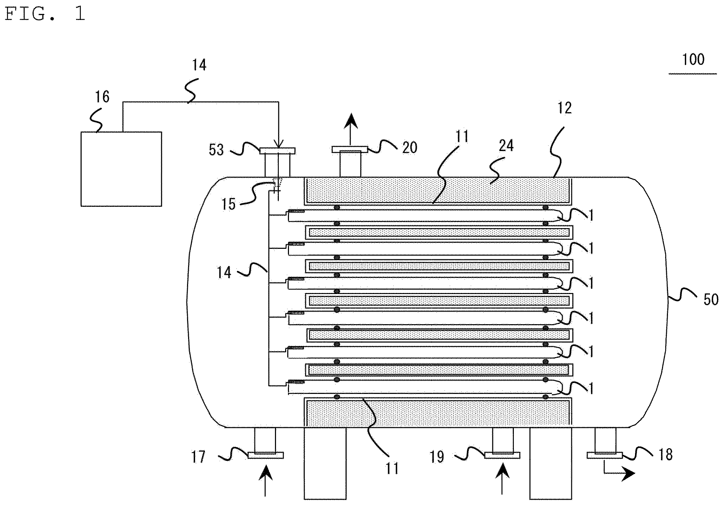

In the ozone generator which is disclosed in Patent Document 4, a metal brush is used as an electricity feeding element. Fine wires which are made from stainless steel are used in the brush part ( in particular, refer to FIG. 1 ). In the ozone generator which is disclosed in Patent Document 5, sputter vapor deposition of stainless steel is conducted to form a voltage applied electrode. An electricity feeding element is composed of fine wired wool of stainless steel, or is composed of carbon type electrically conductive adhesive (in particular, refer to FIG. 1 ).

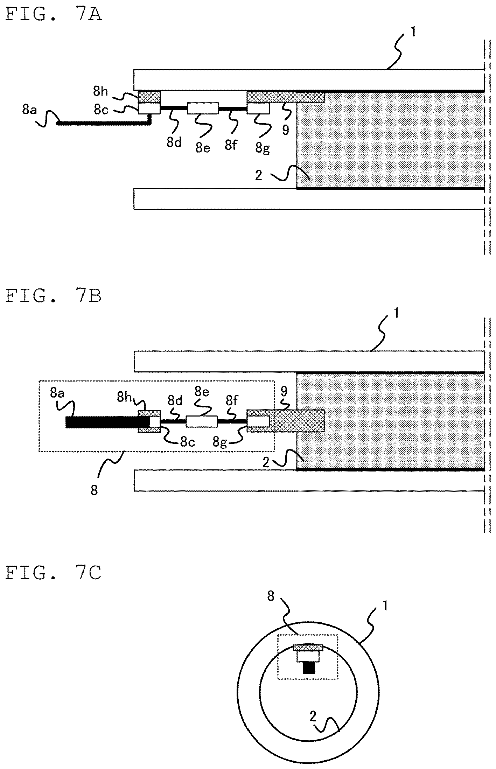

In the ozone generator which is disclosed in Patent Document 6, an electricity feeding member is soldered directly on the voltage applied electrode to form an electric junction, instead of using an electricity feeding element. Because solder is low in the corrosion resistance, the opening portion of a dielectric tube is attached with a cap, and the invasion of corrosive gases into the dielectric tube is prevented ( in particular, refer to FIG. 7).

An ozone generator in which a gas including oxygen is ozonized by an electric discharged is also known from US 2015/247246 A1.

### CITATION LIST

### [PATENT LITERATURE]

Patent Document 1 : JP 2008 - 50200 A
Patent Document 2 : JP 2000 - 128508 A
Patent Document 2 : JP H5 - 69126 U
Patent Document 4 : JP No. 4975120
Patent Document 5 : JP 2007 - 169124 A
Patent Document 6 : WO 2016 / 084181 A

### SUMMARY OF THE INVENTION

### [TECHNICAL PROBLEM]

In the ozone generator in accordance with Patent Document 4, a metal brush is made from stainless steel, and thereby, an oxide film is formed on the surface of the brush. Since the oxide film produces a contact resistance in the contact portion between a metal brush and a voltage applied electrode, heat generation gives rise to in the contact portion. In order to reduce the heat generation in this contact portion, a larger number of fine wires need to be provided in a metal brush, to increase the number of contact places.

In the ozone generator in accordance with Patent Document 5, a voltage applied electrode and an electricity feeding element are made from stainless steel. There exist oxide films on the both, and thus, they suffer from large contact resistance. The temperature of the voltage applied electrode goes up at the time when an electric discharge is underway, and thus, the efficiency in the generation of ozone becomes low. Further, in the case where carbon type electrically conductive adhesive is used for the electricity feeding element, the voltage applied electrode tends to exfoliate from a dielectric tube, since stainless steel which constitutes the voltage applied electrode and carbon are different in the thermal expansion coefficient. Further, carbon is easy to ignite in an oxygen gas atmosphere, when heat is generated.

In the ozone generator in accordance with Patent Document 6, an electricity feeding material is soldered with a voltage applied electrode to form a joint. When the electricity feeding material is soldered with the voltage applied electrode to form a joint, the temperature of the voltage applied electrode rises locally. For the reason above, in the soldered joint part between the electricity feeding material and the voltage applied electrode, the exfoliation of the voltage applied electrode is easy to occur from a dielectric tube.

The present application is made in order to solve the above mentioned issues in the ozone generators. That is to say, the present application aims at supplying an ozone generator which is provided with a highly reliable power feeding structure, by preventing the exfoliation of a voltage applied electrode from a dielectric tube.

### [SOLUTION TO PROBLEM]

An ozone generator in accordance with the present application, includes a main body container which a source gas flows in and an ozonized gas flows out,
an electricity feeding line which transmits an output of an alternating current power source to an inside of the main body container,
a grounded metal electrode which is installed in an inside of the main body container and has a through hole,
a dielectric tube which has an opened portion at one end and an blocked portion at an second end, and is installed in the through hole of the grounded metal electrode,
a voltage applied electrode which is formed on an inner surface of the dielectric tube, and has an opening side end,
a hardened material electrode which extends from the opening side end of the voltage applied electrode toward an electricity feeding line side, and is made from hardened material of electrically conductive adhesive, and
an electricity feeding member which connects the hardened material electrode with the electricity feeding line ;
wherein the electricity feeding member includes an tip end which is fixed to the inner surface of the dielectric tube with the hardened material electrode, and
the tip end of this electricity feeding member is disposed at a position which is separated with a space from the opening side end of the voltage applied electrode.

### [ADVANTAGEOUS EFFECTS OF INVENTION]

The ozone generator in accordance with the present application, includes a main body container which a source gas flows in and an ozonized gas flows out,
an electricity feeding line which transmits an output of an alternating current power source to an inside of the main body container,
a grounded metal electrode which is installed in an inside of the main body container and has a through hole,
a dielectric tube which has an opened portion at one end and an blocked portion at an second end, and is installed in the through hole of the grounded metal electrode,
a voltage applied electrode which is formed on an inner surface of the dielectric tube, and has an opening side end,
a hardened material electrode which extends from the opening side end of the voltage applied electrode toward an electricity feeding line side, and is made from hardened material of electrically conductive adhesive, and
an electricity feeding member which connects the hardened material electrode with the electricity feeding line ;
wherein the electricity feeding member includes an tip end which is fixed to the inner surface of the dielectric tube with the hardened material electrode, and
the tip end of this electricity feeding member is disposed at a position which is separated with a space from the opening side end of the voltage applied electrode.
Thereby, the voltage applied electrode can be prevented from exfoliating from the dielectric tube, and then, a highly reliable ozone generator can be provided.

### BRIEF EXPLANATION OF DRAWINGS

FIG. 1 is a section drawing which shows the internal structure of an ozone generator in accordance with the present embodiments.
FIG. 2 is a configuration diagram which shows the constitution of an alternating current power source in accordance with the present embodiments.
FIG. 3 is a section drawing which shows the internal structure of an electric discharge tube according to Embodiment 1.
FIGS. 4A and 4B are enlarged section drawings which show the principal part of an electricity feeding part according to Embodiment 1, where FIG. 4A is a section drawing of an electricity feeding member which is viewed from a cross direction, and FIG. 4B is a section drawing of the electricity feeding member which is viewed from a downward direction.
FIGS. 5A to 5C are section drawings which show the process of manufacturing an electricity feeding part according to Embodiment 1, where FIG. 5A is a section drawing showing a state in which electrically conductive adhesive is coated to the inner surface of a dielectric tube, FIG. 5B is a drawing showing a state in which an electricity feeding member is installed in the coated electrically conductive adhesive, and FIG. 5C is a section drawing showing a state in which the coated electrically conductive adhesive is solidified.
FIGS. 6A and 6B are enlarged section drawings which show the principal part of an electricity feeding part according to Embodiment 2, where FIG. 6A is a section drawing of an electricity feeding member which is viewed from a cross direction, and FIG. 6B is a section drawing of the electricity feeding member which is viewed from a downward direction.
FIGS. 7A to 7C are enlarged section drawings which show the principal part of an electricity feeding part according to Embodiment 3, where FIG. 7A is a section drawing of an electricity feeding member which is viewed from a cross direction, FIG. 7B is a section drawing of the electricity feeding member which is viewed from a downward direction, and FIG. 7C is a section drawing of the electricity feeding member which is viewed from an electricity feeding line side.
FIGS. 8A and 8B are drawings for explaining the operation of an electricity feeding member according to Embodiment 3, where FIG. 8A is a drawing which represents a state where a short circuit current is flowing, and FIG. 8B is a drawing which represents a state where an intermediate member is dropped.
FIG. 9 is a drawing for explaining the roll of an intermediate member according to Embodiment 3.
FIG. 10 is a drawing which shows the operation of a power source control part 22 of the alternating current power source 16, at the time when a short circuit occurs.
FIG. 11 is a drawing which shows the wave form of a voltage which is generated in an alternating current voltage generating part 21 of the alternating current power source 16, at the time when a short circuit occurs.
FIG. 12 is a drawing which shows the wave form of a current which flows in a dielectric tube in which an electric breakdown is caused, at the time when a short circuit occurs.
FIG. 13 is a drawing which shows the wave form of a current which flows in a normal dielectric tube, at the time when a short circuit occurs.

### DESCRIPTION OF EMBODIMENTS

### Embodiment 1.

Hereinafter, an ozone generator 100 in accordance with the present embodiments will be explained with reference to drawings. FIG. 1 is an overall view for explaining the constitution of the ozone generator 100 in accordance with the present embodiments. An ozone generator main body container 12 (main body container) and an alternating current power source 16 constitute the ozone generator 100. A high pressure tank 50 is a high pressure container, and has an outer shape which looks like a cylinder lying sideways. In order to introduce, into the inside of a tank, an electricity feeding line 14 ( high voltage line or electricity feeding lead line ), coming from the alternating current power source 16, a high voltage line feed port 53 is provided on the upper left of the high pressure tank 50. The electricity feeding line 14 is provided in order to transmit the output of the alternating current power source 16 to the inside of the ozone generator main body container 12 (main body container).

Some measures are taken on the high voltage line feed port 53, so that enough insulation can be ensured between the grounded high pressure tank 50 and the electricity feeding line 14 ( high voltage line or electricity feeding lead line ), and in addition, gases do not leak from there. A source gas inlet port 17 and an ozonized gas outlet port 18 are respectively provided on the lower left of the high pressure tank 50 and on the lower right. A part, through which the electricity feeding line 14 penetrates the ozone generator main body container 12, is insulated by a bushing 15. A source gas, which flows into the ozone generator main body container 12 from the source gas inlet port 17, passes through an electric discharge space in which a silent electric discharge is generated. The source gas becomes an ozonized gas, including ozone which is generated by an electric discharge, and flows out from the ozonized gas outlet port 18 of the ozone generator main body container 12.

In the ozone generator 100, the gas which includes oxygen as a chief constitute or the air can become a source gas. Cooling water 24 is supplied to the inside of the ozone generator main body container 12, from the cooling water inlet port 19, which is provided on the lower side of the high pressure tank 50, and further, is discharged from the cooling water outlet port 20. A dielectric tube 1 and a grounded metal electrode 11 make a pair, on the inside of the ozone generator main body container 12, to form an electric discharge tube. A predetermined number of dielectric tubes 1 and a predetermined number of grounded metal electrodes 11 are disposed, with keeping a required space in between.

The dielectric tube 1 is disposed concentrically with the grounded metal electrode 11, and a gas passes through the inside of the grounded metal electrode 11. The ozone generator main body container 12 can be sealed, and the cooling water 24 will be full filed into the outside of the grounded metal electrode 11. The ozone generator 100 is provided with a number N of dielectric tubes. In a large capacity ozone generator 100, several hundreds of dielectric tubes and grounded metal electrodes are installed on the inside of one ozone generator main body container 12.

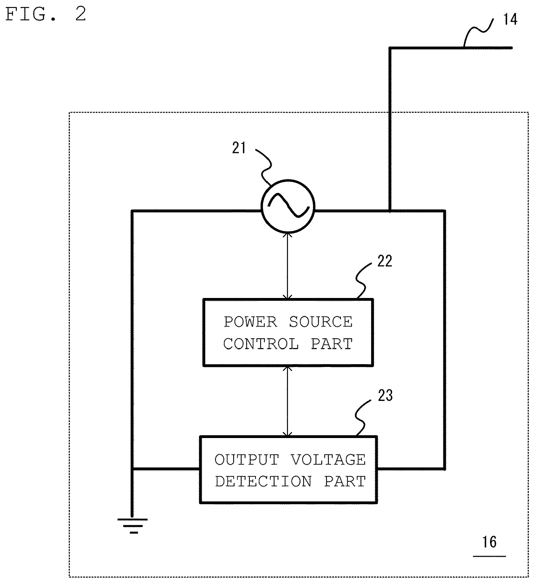

FIG. 2 represents the constitution of an alternating current power source 16. The alternating current power source 16 is provided, on the inside thereof, with an alternating current voltage generating part 21 and a power source control part 22 and an output voltage detection part 23. The power source control part 22 performs the operation control of an ozone generator, the stop control of an ozone generator, the supervisory control of an alternating current power source, and the like. In the present embodiments, the output voltage detection part 23 is connected at a point between the electricity feeding line 14 and an earth potential. The output voltage detection part 23 sends a detected signal to the power source control part 22. The power source control part 22 detects the decrease in the output voltage of the alternating current voltage generating part 21, based on the signal which is received from the output voltage detection part 23.

The one end of an alternating current voltage generating part 21 is grounded. The alternating current voltage generating part 21 of the alternating current power source 16 generates an alternating current voltage. The alternating current voltage which the alternating current voltage generating part 21 generates has a voltage and a frequency, which are large enough to produce a silent electric discharge in a discharge gap. The silent electric discharge is produced via a dielectric body. The alternating current voltage generating part 21 generates an alternating current voltage of high frequency, for example, with a voltage of 3 to 7 kV and a frequency of 0.5 to 5 kHz.

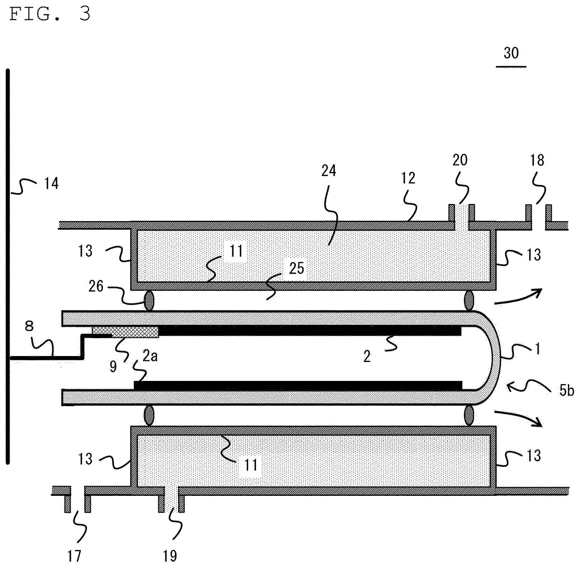

FIG. 3 is a section drawing which shows the schematic constitution of an electric discharge tube 30, according to the present embodiments. In the drawing, one electric discharge tube 30 is shown, in order to explain the details of an electric discharge part. On the inside of the ozone generator main body container 12, one set of a dielectric tube 1 and a grounded metal electrode 11 constitutes one electric discharge tube 30. The dielectric tube 1 is made from, for example, a glass tube of cylindrical shape. The grounded metal electrode 11 of cylindrical shape is constituted of a pipe, which is made from stainless steel, and has a through hole 5b. The dielectric tube 1 and the grounded metal electrode 11 are concentrically disposed via a spacer 26. Both ends of a grounded metal electrode 11 are integrated, for example, by welding, with a metal plate ( end plate 13 ) having an open hole. The voltage applied electrode 2 has an opening side end 2a.

A discharge gap 25 is formed in a narrow space between the dielectric tube 1 and the grounded metal electrode 11. One end ( right side end ; blockade side) of the dielectric tube 1 is blocked, and the other end (left side end ; opening side ) is in the shape of an open port. The voltage applied electrode 2 is disposed so as to contact tightly with the inside of the dielectric tube 1. The voltage applied electrode 2 is made from a metal film, which is formed on the inner surface of the dielectric tube 1, for example, by vapor deposition, plating, or the like. More specific, the metal film corresponds to a stainless steel evaporated film, a nickel plating film, a silver plating film, and the like. The electricity feeding member 8 connects the electricity feeding line 14 with the hardened material electrode 9.

A dielectric tube 1, on the inner surface of which the voltage applied electrode 2 is formed, and a grounded metal electrode 11 of cylindrical shape constitute an electric discharge tube 30. The voltage applied electrode 2 is connected to the output end ( alternating current voltage generating part 21 ) of the alternating current power source 16, via the hardened material electrode 9, the electricity feeding member 8, and the electricity feeding line 14. The ozone generator main body container 12 is grounded, and is at an earth potential. The grounded metal electrode 11, which is of pipe like shape and is made from stainless steel, is joined with an end plate 13 at both sides, by welding and so on. The end plate 13 is joined with the ozone generator main body container 12, by welding and so on.

The end plate 13 divides the ozone generator main body container 12 into three rooms. The rooms on the right and left sides are filled with gases. The middle room is filled with cooling water 24. The cooling water 24 is configured so as to flow from the cooling water inlet port 19 towards the cooling water outlet port 20. A source gas including oxygen is introduced from the source gas inlet port 17. The source gas is ozonized by an electric discharge, while passing through the discharge gap 25. The ozonized source gas is discharged from the ozonized gas outlet port 18, and will be used in an ozone process and the like.

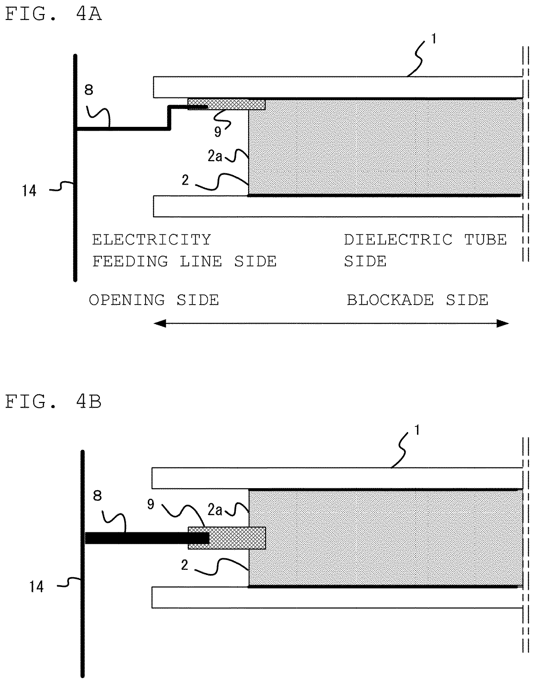

FIG. 4A is an enlarged section drawing which shows the principal part of an electricity feeding part, in which the voltage applied electrode 2 is viewed from the side face. FIG. 4B is an enlarged section drawing which shows the principal part of an electricity feeding part, in which the voltage applied electrode 2 is viewed from the lower side. With reference to these drawings, the structure of the electricity feeding part, which supplies alternating current power to the voltage applied electrode 2 will be explained. The electricity feeding member 8 includes a tip end which is fixed to the inner surface of the dielectric tube 1, with the hardened material electrode 9. The electricity feeding member 8, which supplies a high voltage, feeds the electric power in the output of the alternating current power source 16 to the hardened material electrode 9. The electricity feeding member 8 and the voltage applied electrode 2 are tied with the hardened material electrode 9. The hardened material electrode 9 is made from a hardened material of electrically conductive adhesive. In order to form a hardened material electrode 9, it is necessary to rise the temperature of an electrically conductive adhesive to cure the adhesive, after the electrically conductive adhesive is coated on the inside of a dielectric tube. The hardened material electrode 9 extends toward an electricity feeding line side, from the opening side end 2a of the voltage applied electrode 2.

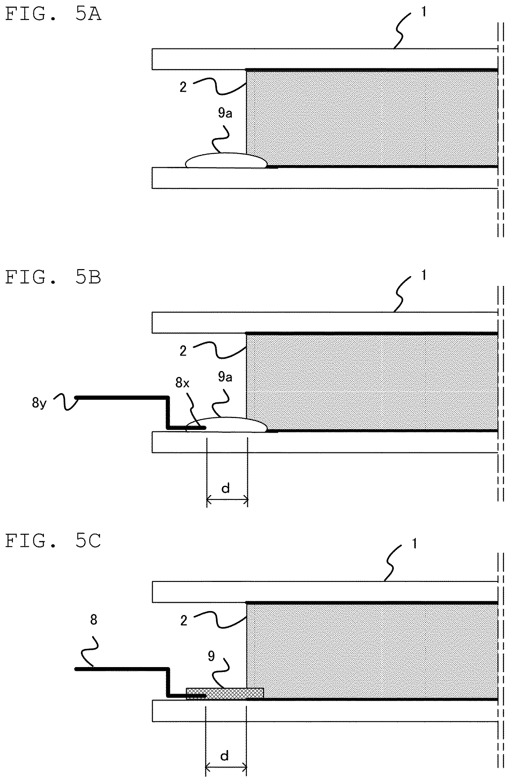

Next, with reference to drawings, explanation will be made about the method of manufacturing a hardened material electrode 9. FIG. 5A is an enlarged section drawing which shows the principal part of an electricity feeding part, where an electrically conductive adhesive is coated. FIG. 5B is a drawing showing the state in which an electricity feeding member is installed in the electrically conductive adhesive. FIG. 5C is an enlarged section drawing showing the principal part of an electricity feeding part, after a temperature raising is performed. The electrically conductive adhesive 9a will be coated to cover an area, which extends from the surface of the electricity feeding line side end part of the voltage applied electrode 2, toward the adjoining dielectric tube inner surface. The electricity feeding member 8 is fixed from and above the coated electrically conductive adhesive 9a, so that the electricity feeding member may not overlap with the voltage applied electrode 2.

That is to say, the electricity feeding member 8 is disposed at the position, where the tip end 8x at the dielectric tube side is separated, with a space d ( > 0 ), from the opening side end of the voltage applied electrode 2. It is to be noted that, the tip end 8y at the electricity feeding line side of the electricity feeding member 8 will be connected with the electricity feeding line 14. After that, a processing for hardening the electrically conductive adhesive 9a and for improving the electrical conductivity will be performed, by raising the temperature of the dielectric tube 1. Here, the type of adhesive whose component is silver is used as an electrically conductive adhesive 9a. When the temperature of the electrically conductive adhesive 9a is raised to about 150 °C after the coating is finished, the electrically conductive adhesive becomes solidified and then, has an increased conductivity.

Next, explanation will be made about the operation of the ozone generator 100. When the power source control part 22 of the alternating current power source 16 sends an operation command to the alternating current voltage generating part 21 of the alternating current power source 16, the alternating current voltage generating part 21 generates an alternating voltage of high frequency. The alternating current voltage is applied to the voltage applied electrode 2, through the electricity feeding line 14, the electricity feeding member 8, and the hardened material electrode 9. When the alternating current voltage of high frequency is applied to a narrow discharge gap 25, which is formed between the voltage applied electrode 2 and the grounded metal electrode 11, a silent electric discharge, which occurs via a dielectric body, is generated in the discharge gap 25. In many cases, the discharge gap 25 is set at a value of 0.6 mm or less.

When a source gas which contains oxygen is introduced from the source gas inlet port 17, the source gas passes through the discharge gap 25, and is ozonized by the action of an silent electric discharge. The source gas becomes an ozonized gas, and is led to the outside from the ozonized gas outlet port 18. The source gas needs to contain at least oxygen, and dry air or oxygen gas to which a slight small amount of nitrogen gas is added is used for the source gas. Since the temperature of the voltage applied electrode 2 and the grounded metal electrode 11 is increased through the heat generation due to the silent electric discharge, the cooling water 24 is made to flow through the cooling water inlet port 19 and the cooling water outlet port 20, and thus, the ozone generator 100 is cooled.

The alternating current voltage, which is outputted from the alternating current voltage generating part 21, is applied to the voltage applied electrode 2, through the electricity feeding line 14, the electricity feeding member 8, and the hardened material electrode 9, and then, a current of high frequency flows through the discharge gap 25. If the resistance value of these components or the junctional resistance value between the components is large, a rise in temperature will be caused by the heat generation through the distribution of electrical power. A rise in temperature shortens the life time of parts, and then, each of those parts is in need to be kept low in the resistance value. The electrically conductive adhesive 9a employs the one which includes silver as a component.

After the electrically conductive adhesive 9a is coated on a part, the part is heated at around 150 °C to cure the adhesive, and thereby, the hardened material will have an increased conductivity. The junctional resistance value between the components can be lowered, by using an electrically conductive adhesive 9a which includes silver as a component. Further, since an adhesive of a high temperature curing type is used for the electrically conductive adhesive 9a, the hardened material electrode 9 shows little change in the characteristics, even though the temperature of the hardened material electrode 9 is raised by the passage of current. Further, since the hardened material electrode 9 shows also little deterioration by a reaction with the oxygen gas, the hardened material electrode is high in the reliability as an electrode.

The electricity feeding member 8 is made of a metallic thin plate or a metallic foil. After the electricity feeding member 8 is fixed from and above the electrically conductive adhesive, so that the electricity feeding member may not overlap with the voltage applied electrode 2, and further, a processing to raise the temperature, for curing the electrically conductive adhesive and for improving the electrical conductivity is performed. The reason for performing the above mentioned processing is to prevent the voltage applied electrode 2 exfoliating from the dielectric tube 1. If the electrically conductive adhesive 9a is coated on the voltage applied electrode 2 and the electricity feeding member 8 is bonded further on them, a stress will work on the voltage applied electrode 2, owing to the differences in the thermal expansion coefficient among the electricity feeding member 8, the voltage applied electrode 2, and the dielectric tube 1, when the temperature is raised up and down in order to harden the electrically conductive adhesive 9a. The voltage applied electrode 2 tends to become easy to exfoliate from the dielectric tube 1, owing to the produced stress.

Explanation will be made in more detail about the exfoliation of the voltage applied electrode 2. The dielectric tube 1, which is made from glass, is small in the coefficient of thermal expansion, and the electricity feeding member 8, which is made from metal, is large in the coefficient of thermal expansion. In the state where the temperature is raised and the electrically conductive adhesive 9a is cured, the dielectric tube 1 and the voltage applied electrode 2 and the hardened material electrode 9 and the electricity feeding member 8 are integrated. Further, the section of the hardened material electrode 9 is of a shape where the section traces the inner circumference of the dielectric tube 1. After that, when the temperature of the electric discharge tube 30 is returned to a room temperature, the electricity feeding member 8, which has a larger thermal expansion coefficient, will become relatively smaller in dimension than the dielectric tube 1.

For the reason mentioned above, when viewed in a section, the electricity feeding member 8 tends to change its form, so that the electricity feeding member may be separated from the inner circumference of the dielectric tube 1 and may shrink to a circumference with a small curvature. If the adhesion strength between the dielectric tube 1 and the voltage applied electrode 2 is small, the voltage applied electrode 2 will be torn off from the surface of the dielectric tube 1, where the voltage applied electrode 2 is bonded on the electricity feeding member 8 with a force, which makes the electricity feeding member 8 to shrink to the circumference with a small curvature. In order to prevent the occurrence of such an exfoliation, it is effective to install the electricity feeding member 8 and the voltage applied electrode 2, with a shift in the position and without an overlapping in the position.

It is to be noted that, although the above mentioned explanation showed an exemplary case in which the whole of the electricity feeding member 8 is constituted of a metallic thin plate or metallic foil, the electricity feeding member is not limited to this embodiment. So far as the electricity feeding member 8 includes a part which is in contact with the hardened material electrode 9, and the part has a configuration of thin plate like or foil like, the electricity feeding member 8 can function as a similar structural object, and then, the development of similar effects can be expected. For example, when the electricity feeding member 8 employs an electric line or a wire, it is allowed to use the electric line or wire, provided with a foil like part, which is formed on one end by pressing or the like.

If the coated film thickness of the electrically conductive adhesive 9a is too large, a stress will work from the hardened material electrode 9 to the voltage applied electrode 2, owing to the differences in thermal expansion coefficient between the electrically conductive adhesive 9a and the dielectric tube 1, at the time when the temperature is raised. As a result, the voltage applied electrode 2 will exfoliate from the dielectric tube 1. If the exfoliation is produced, a micro hollow gap will be made between the voltage applied electrode 2 and the dielectric tube 1. A silent electric discharge is generated in this micro hollow gap and the temperature of the micro hollow gap becomes high, and thus, the voltage applied electrode 2 tends to deteriorate quickly.

In order to prevent the exfoliation of the voltage applied electrode 2, the coated film thickness of the electrically conductive adhesive 9a is preferably 300 µm or less, in the case where the voltage applied electrode 2 uses a stainless steel evaporated film of 2µm or less in film thickness, and 0.5 µm or more in film thickness. Further, the coated film thickness of the electrically conductive adhesive 9a is preferably 300 µm or less, also in the case where the voltage applied electrode uses a nickel plating film, a silver plating film, and so on, of 0.4 µm or less in film thickness and 0.1 µm or more in film thickness.

Further, in the case where the adhesion strength between the voltage applied electrode 2 and the dielectric tube 1 is low, it is recommended that, after an electrically conductive adhesive 9a is coated, a worker performs an operation to press down the electrically conductive adhesive 9a, directly with a spatula or the like, from and above the coated face. When this operation for pressing down the electrically conductive adhesive 9a is performed, the adhesive component in the electrically conductive adhesive 9a can reach partially even the surface of the dielectric tube 1, through fine holes and others, and thereby, the adhesion strength of the voltage applied electrode 2 and the dielectric tube 1 will be increased. It is to be noted that, those fine holes exist in an evaporated film and a plating film, which are formed in the inner periphery of the voltage applied electrode 2.

When the operation for pressing down the electrically conductive adhesive 9a with a spatula or the like is performed, there remains, on the hardened material electrode 9, a mark which is made by pressing a spatula against the surface. In addition, by pressing down the electrically conductive adhesive 9a with a spatula or the like, the coating thickness of the electrically conductive adhesive 9a becomes around the half thickness or less, compared with that of immediately after the coating. The electrically conductive adhesive 9a can have a smaller coating thickness, and thus, the stress which acts on the voltage applied electrode 2 from the hardened material electrode 9 becomes weak. In this way, the combination of a rise in the adhesion strength and a reduction in the stress produces a remarkable effect, that is, the exfoliation of the voltage applied electrode 2 and the dielectric tube 1 is generated to a lesser extent, and a highly reliable hardened material electrode 9 can be constructed. Further, since the voltage applied electrode and the electricity feeding member are small in electrical resistance and low in heating loss, it becomes possible to maintain a high efficiency in the generation of ozone. Further, since the amount of coated electrically conductive adhesive is small, the ozone generator can be provided at a moderate price.

If the ozone generator 100 is operated for a long period of time, the nitrogen oxide of metal will deposit on the surface of the dielectric tube 1 and the grounded metal electrode 11, owing to the electric discharge which is generated between the dielectric tube 1 and the grounded metal electrode 11. The dielectric tube 1 and the grounded metal electrode 11 face each other, at the place where the nitrogen oxide deposits. When the ozone generator 100 is stopped, the ozonized gas begin to flow backwards from an outlet side to a source gas inlet port 17 side. Further, NOx gas, which is generated from the nitrogen oxide deposited on the surface, begins to flow backwards to the source gas inlet port 17 side. The ozonized gas and the NOx gas, which have flowed backwards, invade from the opening portion of the dielectric tube 1, and reach a place near the hardened material electrode 9. Even though the ozonized gas and the NOx gas may react with the hardened material electrode 9, in which silver is included, the concentrations of those gases are low and then, reactions occur only on the surface of the hardened material electrode 9.

It is to be noted that, the running life of the ozone generator 100 can be about 20 years, at the longest. As far as the thickness of the hardened material electrode 9 ( or electrically conductive adhesive 9a ) is 10 µm or more, an increment in the resistance, which is caused by the reaction on the surface of the hardened material electrode 9, is about 10 %, and thereby, the efficiency in the generation of ozone does not fall in the ozone generator 100. Further, there is also no deterioration by the resistance increase in an electrically conductive adhesive part and by the heat generation increase there, and then, the reliability of the ozone generator 100 can be kept high. Therefore, the thickness of the hardened material electrode 9 ( or electrically conductive adhesive 9a) is preferably 10 µm or more, and 300 µm or less.

An ozone generator in accordance with the present embodiments includes ; a main body container which a source gas flows into and an ozonized gas flows out of,
an electricity feeding line which transmits an output of an alternating current power source to an inside of the main body container,
a grounded metal electrode which is installed on an inside of the main body container and has a through hole,
a dielectric tube which has an opened portion at one end and an blocked portion at another end, and is installed in the through hole of the grounded metal electrode,
a voltage applied electrode which is formed on an inner surface of the dielectric tube, and has an opening side end,
a hardened material electrode which extends from the opening side end of the voltage applied electrode toward an electricity feeding line side, and is made from hardened material of electrically conductive adhesive, and
an electricity feeding member which connects the hardened material electrode with the electricity feeding line ;
wherein the electricity feeding member includes an tip end which is fixed to the inner surface of the dielectric tube with the hardened material electrode, and
the tip end of this electricity feeding member is disposed at a position which is separated with a space from the opening side end of the voltage applied electrode.

### Embodiment 2.

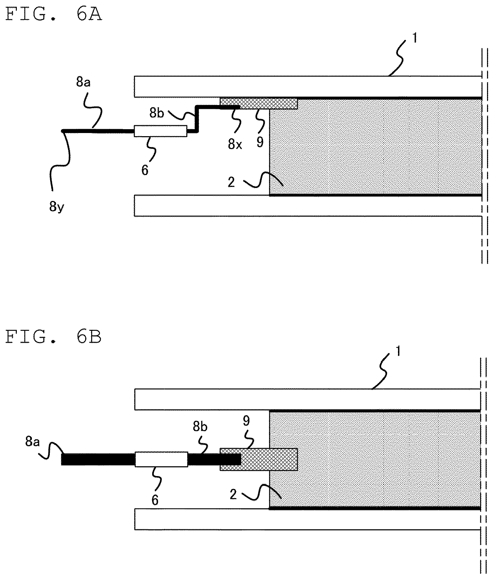

FIG. 6A is an enlarged section drawing showing the principal part of an electricity feeding part according to Embodiment 2, in which the voltage applied electrode 2 is viewed from the side face. FIG. 6B is an enlarged section drawing showing the principal part of the electricity feeding part according to Embodiment 2, in which the voltage applied electrode 2 is viewed from the lower side. With reference to these drawings, explanation will be made about the structure of an electricity feeding part, which is in accordance with the present embodiments and supplies alternating current power to the voltage applied electrode 2. A feature in Embodiment 2 which is different from Embodiment 1 is in a point where the electricity feeding member 8 is divided into an electricity feeding member 8a ( first electricity feeding member ) and an electricity feeding member 8b ( second electricity feeding member ), and a fuse conductor 6 is provided in between to connect the two. Therefore, the electricity feeding member 8 has a fuse conductor 6, an electricity feeding member 8a, and an electricity feeding member 8b. The fuse conductor 6 is held on the inside of the dielectric tube 1, or is held through the electricity feeding line 14 and the electricity feeding member 8a.

The electricity feeding member 8b includes a tip end 8x at the dielectric tube side, which is disposed at a position where the tip end 8x is separated, with a space d, from the opening side end of the voltage applied electrode 2. The electricity feeding member 8a includes a tip end 8y at an electricity feeding line side, which is connected with the electricity feeding line 14. The voltage applied electrode 2 is connected to the output end of the alternating current voltage generating part 21 of the alternating current power source 16, via the hardened material electrode 9, the electricity feeding member 8, and the electricity feeding line 14. The electricity feeding member 8b is a metallic part which electrically connects between the fuse conductor 6 and the hardened material electrode 9, and is made of a metallic thin plate or a metallic foil, like the electricity feeding member 8 of Embodiment 1.

If a dielectric breakdown is caused in the dielectric tube 1 while the ozone generator 100 is in operation, and a short circuit occurs between the voltage applied electrode 2 and the grounded metal electrode 11, a large amount of short circuit current will flow into the fuse conductor 6. As a result of a cutting down of the fuse conductor 6, the dielectric tube 1, in which the dielectric breakdown is caused, and the voltage applied electrode 2 will be disconnected electrically. Since the operation can be continued with remaining electric discharge tubes 30 ( or dielectric tubes ), the ozone generator 100 has no reason to stop its operation. The operation of the ozone generator 100 can be continued, and thus, a highly reliable operation of the ozone generator 100 can be expected.

The fuse conductor 6 generates heat owing to the current which flows at the time of an operation. The temperature of the fuse conductor 6 is increased and the fuse conductor 6 expands thermally. Under the influence of this thermal expansion, a force of a right and left direction will work on the electricity feeding member 8b. Since the electricity feeding member 8b is made of a thin plate or a foil, the electricity feeding member 8b can bend and absorb the thermal expansion. A force does not act on the joined part between the electricity feeding member 8b and the hardened material electrode 9, and thus, the exfoliation of a joined part can be reduced. For the reason above, it becomes possible to provide a highly reliable hardened material electrode 9.

Therefore, in the ozone generator in accordance with the present embodiments, the electricity feeding member has a first electricity feeding member, a fuse conductor, and a second electricity feeding member, the first electricity feeding member is connected to an electricity feeding line, the fuse conductor is connected to the first electricity feeding member and the second electricity feeding member, the second electricity feeding member is fixed to an inner surface of the dielectric tube by the hardened material electrode, and includes a tip end at a dielectric body side, disposed at a position which is separated with a space from an opening side end of the voltage applied electrode.

### Embodiment 3.

FIG. 7A is an enlarged section drawing showing the principal part of an electricity feeding part according to Embodiment 3, in which the voltage applied electrode 2 is viewed from the side face. FIG. 7B is an enlarged section drawing showing the principal part of the electricity feeding part according to Embodiment 3, in which the voltage applied electrode 2 is viewed from the lower side. FIG. 7C is an enlarged section drawing showing the principal part of the electricity feeding part according to Embodiment 3, in which the voltage applied electrode 2 is viewed from the direction of the electricity feeding line 14. With reference to these drawings, explanation will be made about the structure of the electricity feeding part, which is in accordance with the present embodiments and supplies alternating current power to the voltage applied electrode 2. The voltage applied electrode 2 is connected to the alternating current voltage generating part 21, via the hardened material electrode 9, the electricity feeding member 8 ( electricity feeding member 8a, fixed electrode 8c, fuse conductor 8d, intermediate conductor 8e, fuse conductor 8f, fixed electrode 8g, fixed member 8h ), and the electricity feeding line 14.

The fuse conductor 8d ( first fuse conductor ) and the fuse conductor 8f ( second fuse conductor ) are connected to both sides of the intermediate conductor 8e. The fuse conductor 8d, the intermediate conductor 8e, and the fuse conductor 8f constitute a blow down element 10. The fixed electrode 8c ( first fixed electrode ) is connected to the electricity feeding line side of the fuse conductor 8d. Further, the fixed electrode 8g ( second fixed electrode) at the voltage applied electrode side is connected to the dielectric tube side of the fuse conductor 8f. Both of the fixed electrode 8c at the electricity feeding line side and the fixed electrode 8g at the voltage applied electrode side are plate like. The thickness of the plate can be as small as a very thin foil, for example, like a foil of 0.02 mm. The fixed electrode 8c of the electricity feeding line side includes a plate surface, which is fixed to the inner surface of the dielectric tube 1, by the fixed member 8h.

The fixed electrode 8g at the voltage applied electrode side is fixed to the inner surface of the dielectric tube 1, with the hardened material electrode 9. The fixed member 8h is made of thermally conductive adhesive, epoxy type highly heat conductive adhesive, electrically conductive adhesive, inorganic type adhesive, and so on. The fixed electrode 8g at the voltage applied electrode side is directly connected to the voltage applied electrode 2, via the hardened material electrode 9, which is formed in a longitudinal direction of the electrode. The electricity feeding line side end part of the voltage applied electrode 2 is disposed with a separation from the fixed electrode 8g at the voltage applied electrode side, so that the electricity feeding line side end part may not overlap with the fixed electrode 8g at the voltage applied electrode side. According to the present embodiments, the dielectric tube 1 is installed in a horizontal direction, and the electricity feeding member 8 is disposed at an upper side of the inside of the dielectric tube 1, as shown in FIG. 7C.

In this way, the electricity feeding member 8 is provided with the electricity feeding member 8a, the fixed electrode 8c, the blow down element 10, and the fixed electrode 8g. The fixed electrode 8c and the fixed electrode 8g include plate surfaces, which are fixed to the inner surface of the dielectric tube 1, and are constituted with a fixed member or an electrically conductive adhesive. It is to be noted that, the blow down element 10 is composed of an intermediate conductor 8e, at both sides of which a fuse conductor 8d and a fuse conductor 8f are connected. The fixed electrode 8c of plate like shape is connected with the one side of the fuse conductor 8d, where the other side is connected to the intermediate conductor 8e.

The fixed electrode 8g of plate like shape is connected with one side of the fuse conductor 8f, where the other side is connected to the intermediate conductor 8e. It is to be noted that, the electricity feeding member 8a, the fixed electrode 8c, the fuse conductor 8d, the intermediate conductor 8e, the fuse conductor 8f, the fixed electrode 8g, the fixed member 8h, and the hardened material electrode 9, in FIG. 7A, FIG. 7B, and FIG. 7C are shown in dimension, which is unlike the actual proportion to other members in each section. Further, dimensions are enlarged so that the arrangement of respective members may become easy to understand, and each member is graphically illustrated with emphasis.

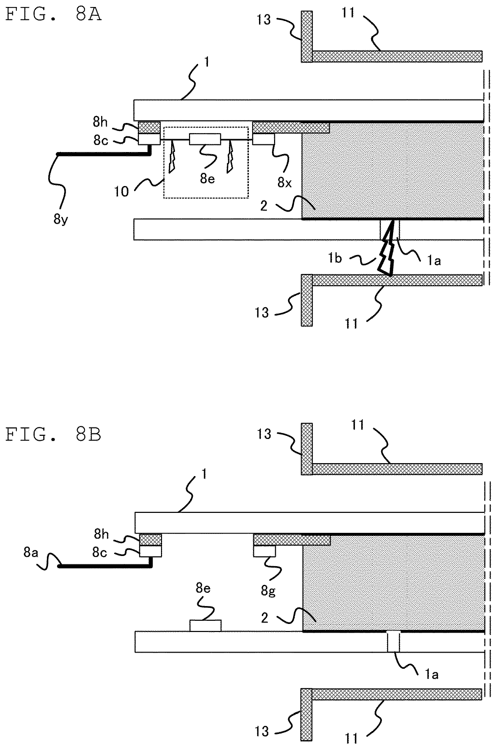

Next, explanation will be made about the operation of the ozone generator 100. FIG. 8A shows that a dielectric breakdown is caused in the dielectric tube 1 and a short circuit current is flowing. FIG. 8B shows that, due to an overcurrent which flowed into the blow down element 10, a blow down is caused in the fuse conductor 8d and the fuse conductor 8f. The fixed electrode 8g, which includes a tip end 8x at the dielectric tube side, is disposed at a position where the tip end 8x is separated with a space d, from the opening side end of the voltage applied electrode 2. The electricity feeding member 8a includes a tip end 8y at the electricity feeding line side, which will be connected with the electricity feeding line 14.

When the power source control part 22 of the alternating current power source 16 sends an operation command to the alternating current voltage generating part 21, an alternating voltage of high frequency which is outputted from the alternating current voltage generating part 21 is applied to the voltage applied electrode 2, through the electricity feeding line 14, the electricity feeding member 8a, the fixed electrode 8c, the blow down element 10 ( fuse conductor 8d, intermediate conductor 8e, and fuse conductor 8f ), the fixed electrode 8g, and the hardened material electrode 9. In the case where a dielectric breakdown is caused in the dielectric tube 1 and a hole 1a is opened in the dielectric tube 1, the voltage applied electrode 2 and the grounded metal electrode 11 become conductive in between. As a result, the output side of the alternating current power source 16 becomes a short circuit state, and a large amount of short circuit current 1b will flow in a moment through a dielectric breakdown part ( hole 1a ) of the dielectric tube 1.

A large amount of short circuit current 1b flows through the blow down element 10, which is attached to the dielectric tube 1 where the dielectric breakdown is caused. The fuse conductor 8d and the fuse conductor 8f, which constitute a blow down element 10, are structural objects with a small cross sectional area, and have a high resistance value. If an overcurrent, like a large amount of short circuit current 1b, flows in a moment through the fuse conductor 8d and the fuse conductor 8f, the temperature thereof rises suddenly, and the fuse conductor 8d and the fuse conductor 8f will melt and evaporate. After the melt and evaporate occurred in the fuse conductor 8d and the fuse conductor 8f, a high temperature plasma state is produced, to generate an arc electric discharge. As a result, the intermediate conductor 8e, which is lost in the support of both sides, will fall on the base part of the inside of the dielectric tube 1.

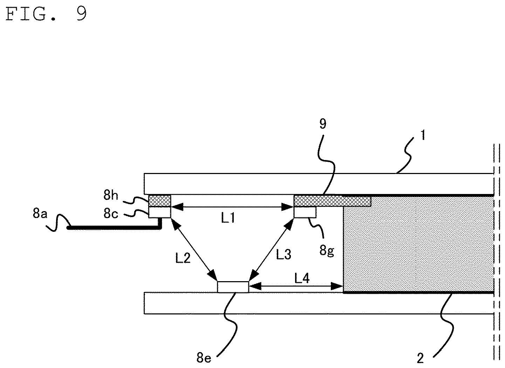

FIG. 9 shows a positional relation among the fixed electrode 8c and the fixed electrode 8g and the fallen intermediate conductor 8e. Using Distance L1, Distance L2, Distance L3, and Distance L4, Insulation distance a, Insulation distance b, and Insulation distance c are defined as follows.
Insulation distance a : An insulation distance ( Distance L1 ) between the fixed electrode 8c and the fixed electrode 8g
Insulation distance b : An insulation distance (Distance L2 + Distance L3 ) between the fixed electrode 8c and the fixed electrode 8g, which is through the intervention of the fallen intermediate conductor 8e
Insulation distance c : An insulation distance (Distance L2 + Distance L4 ) between the fixed electrode 8c and the voltage applied electrode 2, which is through the intervention of the fallen intermediate conductor 8e

It is to be noted that, Distance L1 indicates a space between the fixed electrode 8c and the fixed electrode 8g. Distance L2 indicates a space between the fixed electrode 8c and the fallen intermediate conductor 8e. Distance L3 indicates a space between the fallen intermediate conductor 8e and the fixed electrode 8g. Distance L4 indicates a space between the fallen intermediate conductor 8e and the voltage applied electrode 2. Because the dielectric tube 1 secures enough distances in all of Insulation distance a, Insulation distance b, and Insulation distance c, no arc electric discharge will be generated between the fixed electrode 8c and the fixed electrode 8g, even though a high frequency high voltage is applied again to the fixed electrode 8c at the electricity feeding line side.

In an usual ozone generator, there are many cases in which the effective value of an applied voltage is 7.5 kV or less. Further, there are many cases in which the ozone generator is operated with keeping the gas pressure inside the ozone generator main body container 12 at 0.07 MPa or more. In this case, the occurrence of an arc electric discharge can be prevented at the time when the voltage is re-applied, if the insulation distance is made 7 mm or more. However, there is a case where the inner surface of the dielectric tube 1 is stained and the insulation performance is deteriorated, when the ozone generator is used for a long time. Thereby, it is preferable to keep the insulation distance as large as 14 mm or more, which is twice and more greater than the above mentioned value, if circumstances are allowed. Further, when the operation voltage of an ozone generator is low, for example, in the case where the operation voltage is 4 kV, the size of a blow down element can be made still smaller, by setting the insulation distance at 4 mm or more.

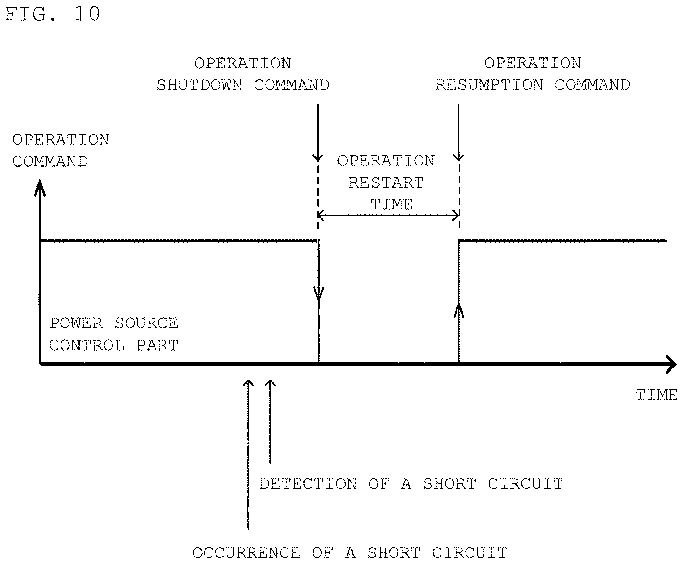

Next, with reference to drawings, explanation will be made about the operation of an alternating current power source 16, at the time when a short circuit occurs. FIG. 10 shows the operation of a power source control part 22 of the alternating current power source 16. If the power source control part 22 sends an operation command to the alternating current voltage generating part 21, the alternating current voltage generating part 21 will be in a driving condition, and the alternating current voltage generating part 21 will output a high voltage of high frequency. When a dielectric breakdown is caused in the dielectric tube 1, the load side of the alternating current power source 16 will be in a short circuit condition. Therefore, the output voltage of the alternating current power source 16 is reduced to near a zero voltage, and at the same time, a large amount of short circuit current flows through the dielectric tube 1 in which a dielectric breakdown is caused and a blow down element.

The electric discharge which is generated in a discharge gap 25 will stop, and thereby, the generation of ozone will be stopped. If the output voltage of the alternating current power source 16 is decreased to a value lower than a preliminarily set threshold value, the output voltage detection part 23 will detect the fall of an output voltage, and the output voltage detection part 23 will send this detection result to the power source control part 22. Because the output voltage is decreased to a value lower than the preliminarily set threshold value, even though the ozone generator is in an electric power driving condition, the power source control part 22 judges that a short circuit occurs in the output power source side (the detection of a short circuit ), and sends an operation shutdown command to the alternating current voltage generating part 21.

After an operation shutdown command is issued and after a prescribed period ( operation restart time ) is past, the power source control part 22 sends an operation resumption command to the alternating current voltage generating part 21. When the alternating current voltage generating part receives an operation resumption command, the alternating current voltage generating part outputs soon a high frequency high voltage again. The duration from the operation resumption command to the operation shutdown command is preliminarily set. The operation restart time can be set as a time greater than the duration of an arc electric discharge, which is generated at the fuse conductor 8d and the fuse conductor 8f. For example, the operation restart time is about 1 to 10 seconds.

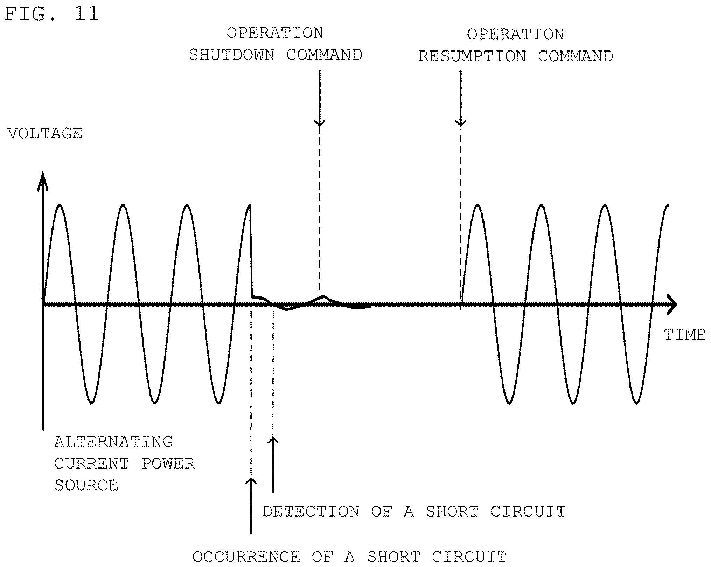

FIG. 11 shows the wave form of an alternating current voltage, which the alternating current voltage generating part 21 of the alternating current power source 16 generates. When the alternating current voltage generating part 21 receives an operation command from the power source control part 22, the alternating current voltage generating part will be in a driving condition, and will output a high voltage of high frequency. When the alternating current voltage generating part 21 receives an operation shutdown command from the power source control part 22, the alternating current voltage generating part will stop an output and the power source output voltage will fall to zero. As a result, a large amount of short circuit current, which flows through the dielectric tube 1 in which a dielectric breakdown is caused, falls to zero.

The arc electric discharge, which is generated around the fuse conductor 8d and the fuse conductor 8f, will disappear with the fall of a large amount of short circuit current. As a result of the disappearance of the fuse conductor 8d and the fuse conductor 8f by melting, the intermediate conductor 8e loses the support at the both sides, and then, falls on the base part of the inside of the dielectric tube 1. When the alternating current voltage generating part 21 receives an operation resumption command from the power source control part 22, the alternating current voltage generating part soon outputs a high frequency high voltage again.

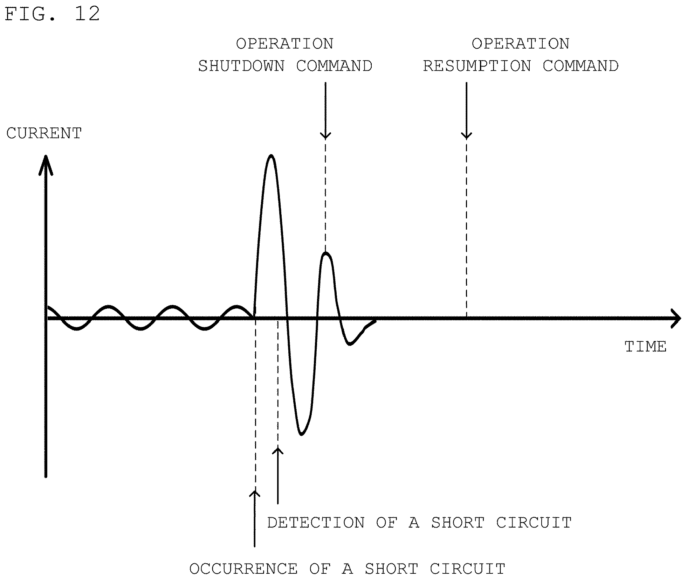

FIG. 12 shows the wave form of a current, which flows in the dielectric tube 1 in which a dielectric breakdown is caused. When the power source control part 22 sends an operation command to the alternating current voltage generating part 21, the alternating current voltage generating part 21 will be in a driving condition, and will output a high voltage of high frequency. An electric discharge will be generated in a discharge gap 25, and the generation of ozone starts. When a dielectric breakdown is caused in the dielectric tube 1, the load side of the alternating current power source 16 will be in a short condition, and thereby, the output voltage of the alternating current power source 16 is reduced to near a zero voltage, and at the same time, a large amount of short circuit current will flow through the dielectric tube 1 and the blow down element 10.

In the dielectric tube 1 in which a dielectric breakdown is caused, the fuse conductor 8d and the fuse conductor 8f melt and evaporate, due to a large amount of short circuit current. Since the intermediate conductor 8e falls onto the base of the dielectric tube 1, the dielectric tube 1 in which a dielectric breakdown is caused, is electrically disconnected from an alternating current power source. Even if an operation resumption command is issued from the power source control part 22 and a high frequency high voltage is re-applied to an electric discharge tube, a current does not flow into a dielectric tube in which a dielectric breakdown is caused.

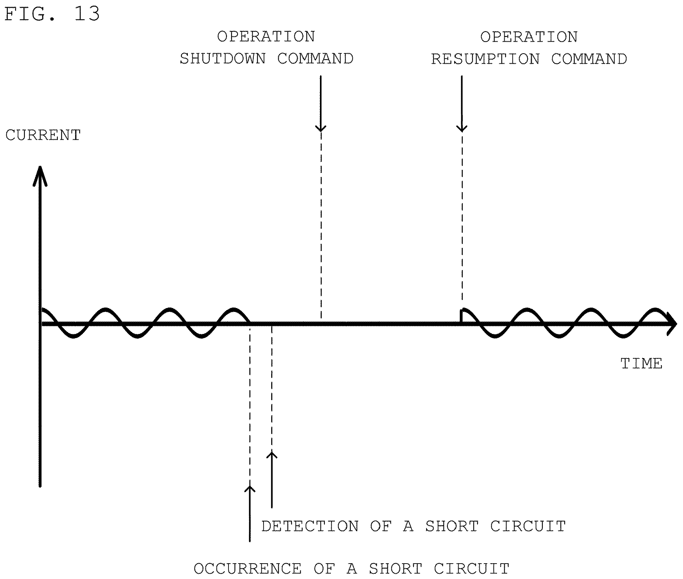

FIG. 13 shows the wave form of a current which flows in a normal dielectric tube 1. When the power source control part 22 sends an operation command to the alternating current voltage generating part 21, the alternating current voltage generating part 21 will be in a driving condition, and will output the high voltage of high frequency. An electric discharge is generated in a discharge gap 25, and the generation of ozone starts. When a short circuit occurs in the dielectric tube 1 in which a dielectric breakdown is caused, the current which flows into a normal dielectric tube 1 falls to near zero, because the voltage applied to a dielectric tube will fall to near zero. The electric discharge which is generated in the discharge gap 25 will stop, and thereby, the generation of ozone will be stopped.

When an operation resumption command is issued from the power source control part 22, the high frequency high voltage will be re-applied to an electric discharge tube, and a current will flow into a normal dielectric tube 1. An electric discharge is generated in the discharge gap 25, and the normal dielectric tube 1 starts the generation of ozone again. N is the number of dielectric tubes which are disposed in the ozone generator main body container 12. Therefore, if the number of dielectric tubes in which a dielectric breakdown is caused is one, the amount of ozone generated falls roughly to [ (N - 1) / N ]. As for the ozone generators, in which N is, for example, as large as some hundreds, the loss rate in the output power tends to become small.

As explained above, the power source control part 22 detects a voltage drop due to the dielectric breakdown in the dielectric tube 1, and stops the alternating current power source 16, and decreases a large amount of short circuit current to zero. The blow down element 10 can disconnect electrically the dielectric tube 1 in which a dielectric breakdown is caused, and the ozone generator 100 can continue the operation by the rebooting of the alternating current power source 16. In this way, it becomes possible to perform the protection ( short circuit protection ), at the time when a short circuit is caused at the load side of the alternating current power source 16.

It is to be noted that, in the above mentioned explanation, an explanation is made, as a method for detecting the dielectric breakdown of a dielectric tube, that is to say, the dielectric breakdown of the electric discharge tube 30, on the case where the fall of an output voltage is measured and detected in the output voltage detection part 23 which is provided on the inside of an alternating current power source. A similar result will be gained, even when the dielectric breakdown of the electric discharge tube 30 is detected and the output of the alternating current power source 16 is controlled, using other methods, which include, for example, a method of detecting the increase in the output current, a method in which a plurality of electric discharge tubes 30 are divided into two groups, and the output of a power supply is divided into two to supply, and the difference of the current values is detected, a method of measuring the light which comes out of from an internal arc electric discharge in an ozone generator main body container, and the like.

Next, explanation will be made about the heat generation and cooling in the blow down element 10, according to the present embodiments. The current value of a normal operation time ( current value per dielectric tube ) which flows into the blow down element 10, is 0.2 to 1 A, in the case where the magnitude of the voltage which is applied to an ozone generator is 3 to 7 kV of a typical case. In contrast, even though the magnitude of an overcurrent ( short circuit current) at the time when a dielectric breakdown is caused in the dielectric tube 1 depends on the impedance of an alternating current power source, the magnitude of overcurrent is roughly 10 times to 1000 times as large as the current value of a normal operation time. It is the dimension and material of the fuse conductor 8d and the fuse conductor 8f, that commands the resistance value between the terminals of the blow down element 10.

Supposing that a fuse conductor (fuse conductor 8d and fuse conductor 8f ) has a cross sectional area S, a length L, and a specific resistance p, the resistance value R of the fuse conductor is given by ρ x ( L / S ). In order to make a blow down element 10 in action, an overcurrent which flows through the blow down element needs to raise the element to a value greater than the temperature at which the fuse conductor 8d and the fuse conductor 8f start to melt. Since a short circuit current flows in a moment, the Joule heat which is generated in a fuse conductor heats the fuse conductor, almost without escaping to the outside. For the reason above, it is determined by a melting temperature, a specific gravity, a specific heat, a specific resistance ρ, and a cross sectional area S, whether the fuse conductor 8d and the fuse conductor 8f start to melt or not. These physical property values depend on the material of a fuse conductor.

In the present embodiments, stainless steel ( SUS304, SUS316, and the like ) is used as the material of a blow down element 10, and the section size of the fuse conductor 8d and the fuse conductor 8f was made to be 0.01 to 0.05 mm in thickness, and 0.05 to 0.30 mm in width. As for the length L of the fuse conductor 8d and the fuse conductor 8f, the resistance value R becomes smaller as the length L becomes shorter, and the heat generation by the current of a normal operation time becomes smaller. Further, as the length L of a fuse conductor 8d and fuse conductor 8f becomes shorter, generated heat, which is produced in the fuse conductor 8d and the fuse conductor 8f, by the current at the time of an operation, becomes easy to conduct to the fixed electrode 8c at the electricity feeding line side and the fixed electrode 8g at the voltage applied electrode side, and then, the temperature of the fuse conductors will be decreased.

In the present embodiments, the fixed electrode 8c and the fixed electrode 8g are fixed to the inner surface of the dielectric tube 1, respectively via the fixed member 8h and the hardened material electrode 9. One of the features according to the present embodiments is in that heat which is generated in a fuse conductor at the time of a normal operation will be radiated, through the dielectric tube 1, from the fixed electrode 8c and the hardened material electrode 9. As for the fixed electrode 8c and the fixed electrode 8g, their respective plate surfaces are fixed to the inner surface of the dielectric tube 1, via the fixed member 8h and the hardened material electrode 9. The generated heat is radiated from the fixed electrode 8c and the fixed electrode 8g, to the dielectric tube 1, by the heat conduction in a fixed whole area. Since heat is radiated in a surface way, from the fixed member 8h and the hardened material electrode 9, the amount of heat release can be increased.

Further, in order not to prevent the heat radiation from the fixed electrode 8c to the dielectric tube 1 as much as possible, adhesives with highly thermal conductivity are used as a fixed member 8h. In a concrete word, it is recommended to use epoxy type highly heat conductive adhesives or electrically conductive adhesive. Further, when inorganic type adhesives, common use adhesives and the like are used, increased heat conduction can be expected, if they are coated with a small thickness. Since the fixed electrode 8g is fixed to the dielectric tube 1 with the electrically conductive adhesive 9a, much heat radiation can be expected in the fixed electrode. When the current of a normal operation time flows into the blow down element 10, the heat which is generated in the fuse conductor 8d will be promptly conducted to the dielectric tube 1, through the fixed electrode 8c and the fixed member 8h at the electricity feeding line side. The heat which is conducted to the dielectric tube 1 spreads into a wide area of the dielectric tube 1, and the heat there is dissipated into the surrounding gas by heat transfer.

In the case where a glass tube is used as the dielectric tube 1, thermal conduction is high within a dielectric body, and then, heat can be conducted promptly in a wide area of the dielectric tube 1, as far as the thickness of the glass tube is around 1 to 3 mm. Since an object with a larger surface area is higher in the capacity to conduct heat, this configuration makes it possible to reduce the rise in temperature of the fuse conductor 8d. As a result, since the deterioration of a material by a rise in temperature can be suppressed, the disconnection in a wire by the deterioration of the fuse conductor 8d can be suppressed, and a highly reliable blow down element 10 can be provided.

Similarly, the heat which is generated in the fuse conductor 8f can also be conducted promptly to the dielectric tube 1, through the fixed electrode 8g and electrically conductive adhesive 9a at the voltage applied electrode side, and heat there can be radiated. It is to be noted that, more heat is easily conducted to the dielectric tube 1, as the adhesive which is used as the fixed member 8h employs a thinner thickness. In the present embodiments, the electrically conductive adhesive 9a is coated in the longitudinal direction of an electrode, and the voltage applied electrode 2 and the fixed electrode 8g at the voltage applied electrode side are disposed so as not to overlap each other. Thereby, heat which is generated in the fuse conductor 8f is not easy to conduct to the voltage applied electrode 2. As a result, since the deterioration by the rise in temperature of the voltage applied electrode 2 can be prevented, the reliability of the voltage applied electrode 2 is improved.

Further, even if almost the same performance is gained between the coating thickness of the electrically conductive adhesive 9a to the voltage applied electrode 2 and the coating thickness of the electrically conductive adhesive 9a to the fixed electrode 8g at the voltage applied electrode side, the generated heat of the fuse conductor 8f can be promptly conducted to the dielectric tube 1 through the fixed electrode 8g, and heat there can be radiated. The preferable coating thickness of the electrically conductive adhesive 9a is 300 µm or less and 10 µm or more, as explained in Embodiment 1. In this way, the hardened material electrode 9 ( electrically conductive adhesive 9a ) can holds, in all, the function for performing the electric connection between the voltage applied electrode 2 and the fixed electrode 8g, and the fixing function and heat conduction function to the dielectric tube 1 of the fixed electrode 8g.

For the reason above, the parts for manufacturing an electrode can be reduced, and further, since the coating time of the electrically conductive adhesive is short, a profound effect in the cost reduction can be expected. Further, when the same material with the hardened material electrode 9 is used as the fixed member 8h, and the coating thickness is also made the same, kinds of adhesives which are to be used can be reduced and the process for coating can be simplified, and then, a profound effect in the cost reduction can be expected. It is to be noted that, in the present embodiments, there is shown a case where only one blow down element 10 is used. However, if two or more blow down elements are used against one electricity feeding member, the reliability of a electricity feeding part can be increased.

In the above mentioned Embodiments 1 to 3, it is to be noted that there are many cases in which stainless steel is used for the electricity feeding member 8, in order to improve the resistance to corrosion with ozonized gas, NOx gas, and the like. Further, there are many cases in which stainless steel is used for the blow down element 10, because of the similar reason. Because a passive film is produced on the surface of stainless steel, the resistance value of a joined part becomes high and tends to become unstable in many cases, when an electric junction with the electrically conductive adhesive 9a is formed on the stainless steel.

In order to solve this issue, when nickel strike plating is applied on the surface of stainless steel of the electricity feeding member 8 ( in particular, the electricity feeding member 8b and the fixed electrode 8g ), which is in contact with the electrically conductive adhesive 9a, a junctional resistance value will become low and the value of the resistance value will be stabilized, and then, the electric reliability increases by leaps and bounds. Nickel strike plating is a plating which is carried out in order to improve the adhesion of a plating to the stainless steel material. In particular, it is a very effective method, in order to improve the characteristics in the electric junction with an electrically conductive adhesive which includes silver as a component.

Further, in the case where an evaporated film made from stainless steel is used as the voltage applied electrode 2, nickel strike plating which is applied on a contact surface with the electrically conductive adhesive 9a is useful. Since the resistance value of the electric junction part between the voltage applied electrode 2 and the hardened material electrode 9 is decreased and stabilized, the high reliability in the electrode can be attained. Nickel strike plating has an effect in eliminating the passive film of a foundation, and improving the adhesion of a plating by activation, and then, and the process will be carried out in a shorter time, applying an electric current, which is higher than an ordinary case.

As a result, in the ozone generator in accordance with the present embodiments, the electricity feeding member has a first fixed electrode, a first fuse conductor, an intermediate conductor, a second fuse conductor, and a second fixed electrode, the first fixed electrode is fixed to the inner surface of the dielectric tube, and is connected with the first fuse conductor, the intermediate conductor is held with the first fuse conductor and the second fuse conductor, the second fuse conductor is connected with the second fixed electrode, and the second fixed electrode is fixed to the inner surface of the dielectric tube with the hardened material electrode, and is disposed at a position which is separated with a space from the opening side end of the voltage applied electrode.

The ozone generator in accordance with the present application includes two or more electric discharge tubes, each of which has a discharge gap via a dielectric body between a voltage applied electrode and a grounded metal electrode, and a gas which contains oxygen flows in the discharge gap. In addition, an alternating current voltage which comes from an alternating current power source is applied between the voltage applied electrode and the grounded metal electrode. Thereby, the ozone generator is configured so that the gas including the oxygen may produce an electric discharge and may become an ozonized gas. An electricity conducting means is provided between the electricity feeding members, and supplies electric power from the alternating current power source to each of the voltage applied electrodes of a plurality of electric discharge tubes. As for the electricity feeding part of a voltage applied electrode, an electrically conductive adhesive is applied from the surface of the electricity feeding line side end part of a voltage applied electrode, to the adjoining dielectric tube inner surface. The electricity feeding member supplies a high voltage, and is fixed from and above the face of the electrically conductive adhesive, so that the electricity feeding member may not overlap with a voltage applied electrode. After that, a processing is performed where the electricity feeding member is raised in temperature to harden and improve an electrical conductivity.

Further, in the ozone generator in accordance with the present application, a fuse is connected between a voltage applied electrode and an electricity feeding member, and a feature is in that the electricity feeding member which connects the fuse and the voltage applied electrode is made from a thin plate or a foil.

Further, the ozone generator in accordance with the present application includes two or more electric discharge tubes, each of which has a discharge gap via a dielectric body between a voltage applied electrode and a grounded metal electrode, and a gas containing oxygen flows in the discharge gap. In addition, an alternating current voltage which comes from an alternating current power source is applied between the voltage applied electrode and the grounded metal electrode. Thereby, the ozone generator is configured so that the gas including the oxygen may produce an electric discharge and may become an ozonized gas. As for the plurality of electric discharge tubes, an electric power is fed from the alternating current power source to each of the voltage applied electrodes of the plurality of electric discharge tubes. A fuse conductor is provided on the way, which melts, when an overcurrent flows through, and a blow down element is connected with the fuse conductors, where the fuse conductors are connected at both sides of an intermediate conductor. A plate like fixed electrode is connected to each of the both sides of the blow down element. A fixed electrode at an electricity feeding line side is fixed to a dielectric tube inner surface by a fixed member, and a fixed electrode at a voltage applied electrode side is connected with a current cutoff element. The current cutoff element is of a structure where the current cutoff element is fixed to the dielectric tube inner surface with the electrically conductive adhesive. An electrically conductive adhesive is applied from the surface of the electricity feeding line side end part of a voltage applied electrode, to the adjoining dielectric tube inner surface. A fixed electrode at the voltage applied electrode side is fixed from and above the face of the electrically conductive adhesive, so that the fixed electrode at the voltage applied electrode side may not overlap with a voltage applied electrode. After that, a processing is performed where the electricity feeding member is raised in temperature to harden the electrically conductive adhesive and improve an electrical conductivity.

Further, in the ozone generator in accordance with the present application, a feature is in that, the voltage applied electrode is a metal film, which is constructed on the inner surface of the dielectric tube by vapor deposition or plating, and is any of a stainless steel evaporated film, a nickel plating film, and a silver plating film. Further, in the ozone generator in accordance with the present application, a feature is in that, the electrically conductive adhesive contains silver as a component. Further, in the ozone generator in accordance with the present application, a feature is in that, the stainless steel evaporated film having a coating thickness of 2 µm or less, or either the nickel plating film having a coating thickness of 0.4 µm or less, or the silver plating film having a coating thickness of 0.4 µm or less is used as a voltage applied electrode, and the coated film thickness of the electrically conductive adhesive is 300 µm or less.

Further, in the ozone generator in accordance with the present application, a feature is in that, the thickness of electrically conductive adhesive is 10 µm or more. Further, in the ozone generator in accordance with the present application, a feature is in that, after an electrically conductive adhesive is applied, an operation is performed to press down, with a spatula, from and above the surface of the electrically conductive adhesive, which is applied on the voltage applied electrode. Further, in the ozone generator in accordance with the present application, a feature is in that, in the case where the electricity feeding member is constructed from stainless steel, nickel strike plating is applied on the face of the electricity feeding member, which is in contact with the electrically conductive adhesive.

Further, in the ozone generator in accordance with the present application, a feature is in that, in the case where a fixed electrode is constructed from stainless steel, nickel strike plating is applied on the face of the fixed electrode, which is in contact with the electrically conductive adhesive. Further, in the ozone generator in accordance with the present application, a feature is in that, in the case where an evaporated film made from stainless steel is used as a voltage applied electrode, nickel strike plating is applied on a contact surface with the electrically conductive adhesive.

Although the present application is described above in terms of various exemplary embodiments and implementations, it should be understood that the various features, aspects and functionality described in one or more of the individual embodiments are not limited in their applicability to the particular embodiment with which they are described, but instead can be applied, alone or in various combinations to one or more of the embodiments. It is therefore understood that numerous modifications which have not been exemplified can be devised without departing from the scope of the present application. For example, at least one of the constituent components may be modified, added, or eliminated. At least one of the constituent components mentioned in at least one of the preferred embodiments may be selected and combined with the constituent components mentioned in another preferred embodiment.

### [EXPLANATION OF NUMERALS AND SYMBOLS]

1 Dielectric tube ; 1a Hole ; 1b Large amount of short circuit current ; 2 Voltage applied electrode ; 2a Opening side end, 5b Through hole ; 6 Fuse conductor ; 8 Electricity feeding member ; 8a Electricity feeding member ; 8b Electricity feeding member ; 8c Fixed electrode ; 8d Fuse conductor ; 8e Intermediate conductor ; 8f Fuse conductor ; 8g Fixed electrode ; 8h Fixed member ; 8x Tip end ; 9 Hardened material electrode ; 10 Blow down element, 11 Grounded metal electrode ; 12 Ozone generator main body container ; 13 End plate ; 14 Electricity feeding line ; 15 Bushing ; 16 Alternating current power source ; 17 Source gas inlet port; 18 Ozonized gas outlet port ; 19 Cooling water inlet port ; 20 Cooling water outlet port ; 21 Alternating current voltage generating part ; 22 Power source control part ; 23 Output voltage detection part ; 24 Cooling water ; 25 Discharge gap ; 26 Spacer ; 30 Electric discharge tube ; 50 High pressure tank ; 53 High voltage line feed port; 100 Ozone generator

## Claims

1. An ozone generator (100), comprising;
a main body container (12) which a source gas flows into and an ozonized gas flows out of,
an electricity feeding line (14) which transmits an output of an alternating current power source (16) to an inside of the main body container (12),
a grounded metal electrode (11) which is installed on an inside of the main body container (12) and has a through hole (5b),
a dielectric tube (1) which has an opened portion at one end and an blocked portion at another end, and is installed in the through hole (5b) of the grounded metal electrode (11),
a voltage applied electrode (2) which is formed on an inner surface of the dielectric tube (1), and has an opening side end (2a),
a hardened material electrode (9) which extends from the opening side end (2a) of the voltage applied electrode (2) toward an electricity feeding line side, and is made from hardened material of electrically conductive adhesive, and
an electricity feeding member (8) which connects the hardened material electrode (9) with the electricity feeding line (14) ;
wherein the electricity feeding member (8) includes an tip end (8x) which is fixed to the inner surface of the dielectric tube (1) with the hardened material electrode (9), and
the tip end (8x) of this electricity feeding member (8) is disposed at a position which is separated with a space (d) from the opening side end of the voltage applied electrode (2).

2. The ozone generator (100) according to claim 1, wherein the electricity feeding member (8) has a fuse conductor (6).

3. The ozone generator (100) according to claim 1, wherein
the electricity feeding member (8) has a first fixed electrode (8c), a first fuse conductor (8d), an intermediate conductor (8e), a second fuse conductor (8f), and a second fixed electrode (8g),
the first fixed electrode (8c) is fixed to the inner surface of the dielectric tube (1), and is connected with the first fuse conductor (8d),
the intermediate conductor (8e) is held with the first fuse conductor (8d) and the second fuse conductor (8g),
the second fuse conductor (8f) is connected with the second fixed electrode (8g), and
the second fixed electrode (8g) is fixed to the inner surface of the dielectric tube (1) with the hardened material electrode (9), and is disposed at a position which is separated with a space (d) from the opening side end of the voltage applied electrode.

4. The ozone generator (100) according to claim 1, wherein the electricity feeding member (8) is made from a plate or a foil.

5. The ozone generator (100) according to claim 1, wherein the voltage applied electrode (2) is made from any one of a stainless steel evaporated film, a nickel plating film, and a silver plating film.

6. The ozone generator (100) according to claim 1, wherein the hardened material electrode (9) includes silver.

7. The ozone generator (100) according to claim 1, wherein a film thickness of the hardened material electrode (9) is 300 µm or less and 10 µm or more.

8. The ozone generator (100) according to claim 1, wherein the voltage applied electrode (2) is made from a stainless steel on which nickel strike plating is applied.

9. The ozone generator (100) according to claim 1, wherein the electricity feeding member (8) is made from a stainless steel on which nickel strike plating is applied.

10. The ozone generator (100) according to claim 3, wherein the first fixed electrode (8c) or the second fixed electrode (8g) is made from a stainless steel on which nickel strike plating is applied.

## Patentansprüche

1. Ozongenerator (100), der Folgendes aufweist;
einen Hauptkörperbehälter (12), in den ein Quellgas einströmt und aus dem ein ozonisiertes Gas ausströmt,
eine Elektrizitätszuführungsleitung (14), die einen Ausgang einer Stromquelle (16) für Wechselstrom auf eine Innenseite des Hauptkörpers (12) überträgt,
eine geerdete Metallelektrode (11), die an einer Innenseite des Hauptkörperbehälters (12) angebracht ist und ein durchgehendes Loch (5b) aufweist,
eine dielektrische Röhre (1), die einen offenen Abschnitt an einem Ende und einen verschlossenen Abschnitt an einem anderen Ende aufweist und die in dem durchgehenden Loch (5b) der geerdeten Metallelektrode (11) installiert ist,
eine spannungsbeaufschlagte Elektrode (2), die auf einer inneren Oberfläche der dielektrischen Röhre (1) ausgebildet ist und ein öffnungsseitiges Ende (2a) aufweist,
eine Elektrode (9) aus gehärtetem Material, die sich von dem öffnungsseitigen Ende (2a) der spannungsbeaufschlagten Elektrode (2) in Richtung einer Elektrizitätszuführungsleitungsseite erstreckt und aus gehärtetem Material aus elektrisch leitendem Klebstoff hergestellt ist, und
ein Elektrizitätszuführungselement (8), das die Elektrode (9) aus gehärtetem Material mit der Elektrizitätszuführungsleitung (14) verbindet;
wobei das Elektrizitätszuführungselement (8) ein Spitzenende (8x) aufweist, das mit der Elektrode aus gehärtetem Material (9) an der inneren Oberfläche des dielektrischen Rohrs (1) fixiert ist, und
das Spitzenende (8x) dieses Elektrizitätszuführungselements (8) an einer Position angeordnet ist, die mit einem Zwischenraum (d) von dem öffnungsseitigen Ende der spannungsbeaufschlagten Elektrode (2) getrennt ist.

2. Ozongenerator (100) nach Anspruch 1, wobei das Elektrizitätszuführungselement (8) einen Sicherungsleiter (6) aufweist.

3. Ozongenerator (100) nach Anspruch 1, wobei
das Elektrizitätszuführungselement (8) eine erste fixierte Elektrode (8c), einen ersten Sicherungsleiter (8d), einen Zwischenleiter (8e), einen zweiten Sicherungsleiter (8f) und eine zweite fixierte Elektrode (8g) aufweist,
die erste fixierte Elektrode (8c) an der inneren Oberfläche des dielektrischen Rohrs (1) fixiert ist und mit dem ersten Leiter (8d) verbunden ist,
der Zwischenleiter (8e) wird mit dem ersten Sicherungsleiter (8d) und dem zweiten Sicherungsleiter (8g) gehalten,
der zweite Sicherungsleiter (8f) mit der zweiten fixierten Elektrode (8g) verbunden ist, und die zweite fixierte Elektrode (8g) mit der Elektrode (9) aus gehärtetem Material an der inneren Oberfläche der dielektrischen Röhre (1) fixiert ist und an einer Position angeordnet ist, die mit einem Zwischenraum (d) von dem öffnungsseitigen Ende der spannungsbeaufschlagten Elektrode getrennt ist.

4. Ozongenerator (100) nach Anspruch 1, wobei das Elektrizitätszuführungselement (8) aus einer Platte oder einer Folie hergestellt ist.

5. Ozongenerator (100) nach Anspruch 1, wobei die spannungsbeaufschlagte Elektrode (2) aus einem aufgedampften Film aus rostfreiem Stahl, einem vernickelten Film oder einem versilberten Film hergestellt ist.

6. Ozongenerator (100) nach Anspruch 1, wobei die Elektrode aus gehärtetem Material (9) Silber aufweist.

7. Ozongenerator (100) nach Anspruch 1, wobei eine Filmdicke der Elektrode aus gehärtetem Material (9) 300 µm oder weniger und 10 µm oder mehr beträgt.

8. Ozongenerator (100) nach Anspruch 1, wobei die spannungsbeaufschlagte Elektrode (2) aus einem rostfreien Stahl hergestellt ist, auf den eine Nickelbeschichtung aufgebracht ist.

9. Ozongenerator (100) nach Anspruch 1, wobei das Elektrizitätszuführungselement (8) aus einem rostfreien Stahl hergestellt ist, auf dem eine Nickelbeschichtung aufgebracht ist.

10. Ozongenerator (100) nach Anspruch 3, wobei die erste fixierte Elektrode (8c) oder die zweite fixierte Elektrode (8g) aus einem rostfreien Stahl hergestellt ist, auf den eine Nickelbeschichtung aufgebracht ist.

## Revendications

1. Générateur d'ozone (100), comprenant :
un récipient servant de corps principal (12) vers l'intérieur duquel circule un gaz source et vers l'extérieur duquel circule un gaz ozonisé,
une ligne d'alimentation électrique (14) qui transmet une sortie d'une source d'alimentation à courant alternatif (16) à un intérieur du récipient servant de corps principal (12),
une électrode métallique mise à la terre (11) qui est installée sur un intérieur du récipient servant de corps principal (12) et a un trou débouchant (5b),
un tube diélectrique (1) qui a une partie ouverte à une extrémité et une partie bloquée à une autre extrémité, et est installé dans le trou débouchant (5b) de l'électrode métallique mise à la terre (11),
une électrode soumise à une tension (2) qui est formée sur une surface interne du tube diélectrique (1), et a une extrémité côté ouverture (2a),
une électrode en matériau durci (9) qui s'étend depuis l'extrémité côté ouverture (2a) de l'électrode soumise à une tension (2) vers un côté ligne d'alimentation électrique, et est fabriquée à partir d'un matériau durci à base d'adhésif électriquement conducteur, et
un élément d'alimentation électrique (8) qui relie l'électrode en matériau durci (9) à la ligne d'alimentation électrique (14) ;
dans lequel l'élément d'alimentation électrique (8) comporte un embout (8x) qui est fixé à la surface interne du tube diélectrique (1) avec l'électrode en matériau durci (9), et
l'embout (8x) de cet élément d'alimentation électrique (8) est disposé à une position qui est séparée par un espace (d) de l'extrémité côté ouverture de l'électrode soumise à une tension (2).

2. Générateur d'ozone (100) selon la revendication 1, dans lequel l'élément d'alimentation électrique (8) a un conducteur à fusible (6).

3. Générateur d'ozone (100) selon la revendication 1, dans lequel
l'élément d'alimentation électrique (8) a une première électrode fixée (8c), un premier conducteur à fusible (8d), un conducteur intermédiaire (8e), un deuxième conducteur à fusible (8f), et une deuxième électrode fixée (8g),
la première électrode fixée (8c) est fixée à la surface interne du tube diélectrique (1), et est reliée au premier conducteur à fusible (8d),
le conducteur intermédiaire (8e) est maintenu avec le premier conducteur à fusible (8d) et le deuxième conducteur à fusible (8f),
le deuxième conducteur à fusible (8f) est relié à la deuxième électrode fixée (8g), et
la deuxième électrode fixée (8g) est fixée à la surface interne du tube diélectrique (1) avec l'électrode en matériau durci (9), et est disposée à une position qui est séparée par un espace (d) de l'extrémité côté ouverture de l'électrode soumise à une tension.

4. Générateur d'ozone (100) selon la revendication 1, dans lequel l'élément d'alimentation électrique (8) est fabriqué à partir d'une plaque ou d'une feuille.

5. Générateur d'ozone (100) selon la revendication 1, dans lequel l'électrode soumise à une tension (2) est fabriquée à partir d'un quelconque élément parmi un film d'acier inoxydable évaporé, un film de dépôt de nickel, et un film de dépôt d'argent.

6. Générateur d'ozone (100) selon la revendication 1, dans lequel l'électrode en matériau durci (9) comporte de l'argent.

7. Générateur d'ozone (100) selon la revendication 1, dans lequel une épaisseur de film de l'électrode en matériau durci (9) est de 300 µm ou moins et 10 µm ou plus.

8. Générateur d'ozone (100) selon la revendication 1, dans lequel l'électrode soumise à une tension (2) est fabriquée à partir d'un acier inoxydable sur lequel est appliqué un dépôt amorce de nickel.

9. Générateur d'ozone (100) selon la revendication 1, dans lequel l'élément d'alimentation électrique (8) est fabriqué à partir d'un acier inoxydable sur lequel est appliqué un dépôt amorce de nickel.

10. Générateur d'ozone (100) selon la revendication 3, dans lequel la première électrode fixe (8c) ou la deuxième électrode fixe (8g) est fabriquée à partir d'un acier inoxydable sur lequel est appliqué un dépôt amorce de nickel.
